# EUROPÄISCHE PATENTSCHRIFT

(11) **EP 0 703 324 B1**
(45) Veröffentlichungstag und Bekanntmachung des Hinweises auf die Patenterteilung: **01.10.1997**
(21) Anmeldenummer: 95113439.4
(22) Anmeldetag: 26.08.1995
(51) Int. Cl.: E03F 5/16

(54) **Schlammfang für mit Sinkstoffen verschmutzte Abwässer**
Separator for water polluted with sediments
Séparateur pour des eaux résiduaires polluées

(30) Priorität: 08.09.1994 DE 9414562 U
(43) Veröffentlichungstag der Anmeldung: 27.03.1996
(73) Patentinhaber: PASSAVANT-WERKE AG, D-65322 Aarbergen 7 (DE)
(72) Erfinder: Bachon, Ulrich, D-65582 Diez/Lahn (DE); Middelhaufe, Axel, D-65582 Diez/Lahn (DE); Loseries, Hans Georg, D-65582 Diez/Lahn (DE)

(56) Entgegenhaltungen:
- CH-A- 622 708
- DE-A- 3 704 911
- DE-U- 9 000 913
- DE-U- 9 216 581
- US-A- 2 337 203

## Beschreibung

Die Neuerung bezieht sich auf einen Schlammfang, das ist ein Beruhigungsbecken zur Abscheidung von Sinkstoffen aus mit diesen Stoffen verschmutzten Abwässern. Abwässer, die neben den Sinkstoffen z. B. auch Leichtflüssigkeiten oder Fette enthalten, müssen nach DIN 1999 / DIN 4040 vor Einleitung in einen Leichtstoffabscheider durch einen Schlammfang geführt werden. Schlammfänge sind in der Regel quer horizontal von einem Einlauf zu einen gegenüberliegenden oberen Auslauf durchströmte Becken. Während der Aufenthaltszeit haben die Sinkstoffe Gelegenheit, in die strömungsfreie Zone des Schlammfangs zu sinken und sich am Boden zu sammeln. Sie werden in nach DIN vorgeschriebenen regelmäßigen Abständen von einem Entsorgungsfahrzeug abgesaugt.

Insbesondere bei mit Öl in feindisperser Verteilung befrachteten Abwässern werden sog. Koaleszenzabscheider eingesetzt, in denen die Dispersion an den Koaleszenzeinsätzen zu abscheidefähigen Partikeln aggregiert wird. Die Aggregate können dann zur Oberfläche aufschwimmen. Diese Abwässer enthalten jedoch meist auch Sinkstoffe, die größtenteils an die dispergierte Leichtflüssigkeit angelagert sind. Diese mit Ölschlamm bezeichneten Partikel sind wegen der von Wasser nur geringfügig abweichenden spezifischen Dichte nur schwer abscheidbar. Sie setzen sich größtenteils in dem Koaleszenzeinsatz ab und verstopfen ihn allmählich bis zur völligen Undurchlässigkeit. Der Koaleszenzeinsatz muß in regelmäßigen Abständen freigespült werden.

Die Aufgabe, diesen Nachteil zu beseitigen und insbesondere dafür zu sorgen, daß diese Abwasserinhaltsstoffe den Abscheider bzw. den Koaleszenzabscheider nicht mehr belasten, wird neuerungsgemäß dadurch gelöst, daß die Mündung des Zulaufs im Schlammfang mindestens angenähert tangential zur Wand des Beruhigungsbeckens ausgerichtet ist, daß der obere Auslauf etwa im Zentrum des Beruhigungsbeckens liegt und daß der zentrale obere Auslauf von einem vertikalachsig um ihn aufgestellten hohlkörperförmigen durchlässigen Einsatz im Abstand umgeben ist.
Mit dieser neuen Gestaltung wird eine ganz andere Art der Durchströmung des Schlammfangs erreicht. Durch den tangential ausgerichteten Zulauf stellt sich eine spiralartig verlaufende Strömung ein, die den hohlkörperförmigen Einsatz umläuft.

An der Außenseite des Einsatzes ist die Strömung tangential zur Außenfläche ausgerichtet. Das Abwasser durchfließt den Einsatz dann radial nach innen in noch weiter beruhigter Form zum zentralen Auslauf hin. Beim Übergang von der tangentialen in die radiale Strömungsrichtung beim Durchqueren des Einsatzes werden auf die Strömungsfäden Scherkräfte ausgeübt, die zu einer Trennung der Ölschlammpartikel und zu einer Koaleszenz der Öldispersionen führen können. Sowohl die vergrößerten Öltropfen als auch die abgetrennte Schlammpartikel haben Gelegenheit, in die strömungslosen Zonen zu wandern und sich dort zwecks späterem Abzug zu sammeln. Dieser neue Schlammfang wirkt also schon wie eine Trennvorrichtung und ein Vorabscheider. Der nachgeschaltete (Koaleszenz -) Abscheider wird entlastet und erbringt einen besseren Abscheidegrad bei den Leichtflüssigkeiten.
Der aus Lochblech oder einem Gittergewebe bestehende Einsatz kann beliebige, auch mindestens an einer Stelle am Umfang offene Form haben. Besonders vorteilhaft ist aber eine Zylindermantelform, die zudem genau konzentrisch zum zentrischen Auslauf angeordnet ist. Die Strömungsgeschwindigkeit verringert sich dann in dem spiralig durchströmten Ringraum kontinuierlich, weil fortlaufend Strömungsanteile in das Innere des Einsatzes übergehen. Diese Abschnitte des Ringraums sind die bevorzugten Stellen für das Abtrennen der Sinkstoffe. Der Zulauf ist vorzugsweise tiefgelegt und mündet etwa in der unteren Hälfte der Füllhöhe. Seine Mündung ist etwas nach oben gerichtet.

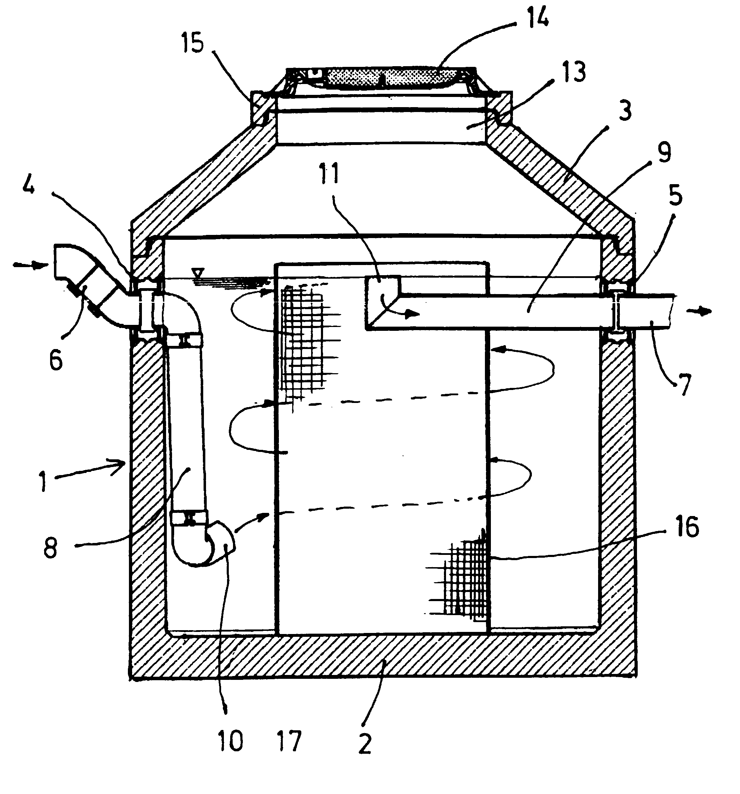

Hiermit wird eine Spiralströmung erzeugt, die sich schraubwendelartig nach oben bewegt und den Einsatz auf einem sehr langen Weg mehrmals umläuft.
In der Abbildung ist eine bevorzugte Ausführungsform des erfindungsgemäßen Schlammfangs im vertikalen Schnitt dargestellt. Der in Stahlbeton hergestellte Schlammfang 1 hat Zylinderform mit monolithisch angeformtem Boden 2, einem in Nut/Falz-Verbindung aufgesetzten Konusdeckel 3 und zwei Mauerflanschen 4, 5 für den Anschluß des Zulaufs 6 und des Ablaufs-7. An dem Innenflansch der Mauerflansche sind die Zulauf-(8) bzw. Auslaufarmaturen 9 befestigt. Die Zulaufarmatur besteht aus zwei 90°-Krümmern, einem vertikal verlaufenden Rohrstück und einem tangential und leicht ansteigend ausgerichteten Mundstück 10. Das Auslaufrohr 9 besteht nur aus einem im Schlammfangzentrum beginnenden Winkelrohr, dessen horizontal angeordnete Einlauföffnung 11 den Spiegel 12 im Schlammfang bestimmt. Die Wartungs- und Entsorgungsöffnung 13 des Schlammfangbehälters 1 ist durch einen Schachtdeckel 14 abgedeckt, unter dem sich je nach Einbautiefe noch ein oder mehrere Schachtringe befinden können. Im dargestellten Fall ist nur ein Unterlagsring 15 für den Gußrahmen des Schachtdeckels vorhanden.

Der zentrale Auslauf 11 ist von einem zylindermantelförmigen Einsatzkörper 16 umgeben, der bis auf den Behälterboden 2 und bis über den Wasserspiegel reicht. Der Einsatzkörper 16 besteht hier aus einem Stahldrahtgewebe; es kann aber auch Lochblech, Schlitzblech oder Streckmetall verwendet werden.

Das Blech bzw. Gewebe kann gewellt oder gefaltet sein, um eine größere Angriffsfläche zu bieten. Der Einsatzkörper, der beim Absaugen des Schlamms nicht ausgebaut zu werden braucht, dient gleichzeitig als Halterung für das Winkelrohr.
Im Abscheidebetrieb tritt das belastete Abwasser nach Pfeilrichtung 17 in den Schlammfang ein und durchströmt ihn unter fortlaufender Verlangsamung spiralförmig nach oben. Strömungsfäden treten radial durch den Einsatzkörper und steigen dann zum Auslauf 11 auf. Die von den Sinkstoffen getrennten Leichtflüssigkeitströpfchen steigen im Innern des Einsatzkörpers zum Wasserspiegel und werden mit dem Abwasser in den nachgeschalteten Abscheider abgeführt.

## Patentansprüche

1. Schlammfang für mit Sinkstoffen und ggf. an ihnen angelagerten Leichtstoffen verschmutzte Abwässer, bestehend aus einem einen seitlichen Zulauf und einen oberen Auslauf aufweisenden Beruhigungsbecken, **dadurch gekennzeichnet,** daß die Mündung (10) des Zulaufs (8) mindestens angenähert tangential zur Wand des Beruhigungsbeckens (1) ausgerichtet ist, daß der obere Auslauf (11) etwa im Zentrum des Beruhigungsbeckens (1) liegt, und daß der zentrale obere Auslauf (11) von einem vertikalachsig um ihn aufgestellten hohlköperformigen, fur das Abwasser durchlässigen, sich bis zum Boden des Beckens herunter erstreckenden Einsatz (16) im Abstand umgeben ist.

2. Schlammfang nach Anspruch 1, **dadurch gekennzeichnet,** daß der Einsatz (16) zylindermantelförmig geschlossen ist und den Auslauf konzentrisch umgibt.

3. Schlammfang nach Anspruch 2, **dadurch gekennzeichnet,** daß der Einsatz (16) aus einem Drahtgitter oder Lochblech besteht.

## Claims

1. Sludge trap for wastewater polluted with settleable solids and possibly with associated light matter, composed of a stilling tank equipped with a lateral admission device and a top outlet and containing a hollow insert (16) arranged along the vertical axis, ***wherein*** the orifice (10) of the admission device (8) is arranged in a position at least approximately tangential to the wall of the stilling tank (1), wherein the top outlet (11) is approximately in the centre of the hollow insert (16), wherein the insert (16) is permeable to wastewater, and wherein the insert (16) extends completely fown to the bottom of the tank.

2. Sludge trap accorading to claim 1, ***wherein*** the insert (16), being of the cylinder-jacket closed type, forms a concentric enclosure for the outlet.

3. Sludge trap accorading to claim 1, ***wherein*** the insert (16) consists of a wire grid or a perforated screen.

## Revendications

1. Piège à boues pour eaux usées contaminées de matières sédimentables et de matières légères éventuellement fixées sur elles, composé d'un bassin de tranquilisation pourvu d'une amenée latérale et d'un écoulement supérieur et contenant une garniture (16) de forme creuse dans le sens de l'axe vertical, ***caractérisé en ce que*** l'ouverture (10) de l'amenée (8) est arrangée au moins approximativement dans une position tangentielle par rapport à la paroi du bassin de tranquilisation (1), que l'écoulement supérieur (11) se trouve approximativement au centre de la garniture (16) de forme creuse, que la garniture (16) est perméable aux eaux usées et que la garniture (16) s'étend jusqu'au fond du bassin.

2. Piège à boues suivant la revendication 1 ***caractérisée en ce que*** la garniture (16) assume une forme de corps de cylindre fermé enveloppant en position concentrique l'écoulement.

3. Piège à boues suivant la revendication 2 ***caractérisée en ce que*** la garniture (16) consiste en treillis en fils ou une tôle perforée.
